# EUROPEAN PATENT SPECIFICATION

(11) **EP 3 699 042 B1**
(45) Date of publication and mention of the grant of the patent: **23.08.2023**
(21) Application number: 18868973.1
(22) Date of filing: 12.10.2018
(51) Int. Cl.: G01B 11/275, B60W 30/12

(54) **CAR BODY CENTER LINE CALIBRATION DEVICE AND METHOD**
VORRICHTUNG UND VERFAHREN ZUR KALIBRIERUNG DER MITTELACHSE EINER WAGENKAROSSERIE
DISPOSITIF ET PROCÉDÉ D'ÉTALONNAGE D'UN AXE CENTRAL DE CARROSSERIE AUTOMOBILE

(30) Priority: 20.10.2017 CN 201710987229
(43) Date of publication of application: 26.08.2020
(73) Proprietor: AUTEL INTELLIGENT TECHNOLOGY CORP., LTD., Shenzhen, Guangdong 518055 (CN)
(72) Inventor: QIU, Longxue, Shenzhen, Guangdong 518055 (CN); SHEN, Zhiqin, Shenzhen, Guangdong 518055 (CN); CHEN, Jin, Shenzhen, Guangdong 518055 (CN)
(74) Representative: Gulde & Partner
(86) International application number: PCT/CN2018/110090
(87) International publication number: WO 2019/076248

(56) References cited:
- CN-A- 104 713 499
- CN-A- 106 382 922
- CN-A- 107 856 649
- CN-U- 204 461 430
- DE-U1-202015 008 954
- JP-A- 2012 229 987
- US-A1- 2004 165 174
- US-A1- 2013 110 314
- US-A1- 2013 325 252

## Description

### TECHNICAL FIELD

This application relates to the technical field of vehicle maintenance and device demarcation, and in particular, to a device and a method for demarcating a center line of an automobile body.

### BACKGROUND

In the field of vehicle maintenance, during four-wheel alignment and calibration of an advanced driver assistant systems (ADAS), etc., a center line of an automobile body is required to be demarcated, to facilitate subsequent placement of a calibration device. Alignment of a device center with an automobile body center, placement of a device at an interval of a distance from an automobile body, and enabling of a device to be perpendicular to a central plane of an automobile body, etc. all require demarcation of a center line of an automobile body.

In the related art, the document D1 (Patent Application Pub. No.: DE202015008954 U1) discloses a method and device for calibrating assistance systems of vehicles. The device includes a calibration wall on a holding rack, a calibration board attached having a printed or otherwise applied to the target calibration image. The retaining frame stands on a wheeled chassis with four wheels. The calibration wall in the range between the calibration panel and the chassis with a horizontally arranged adjustment bar are provided. The adjustment bar scale connected with the adjustment bar, so that owing to the identical dimensions of the adjustment bar scale and the adjustment bar mirror in the folded-down adjustment bar scale the adjustment bar mirror by means of the adjustment bar scale is covered.

The related art document D2 (Patent Application Pub. No.: US20130110314A1) discloses a method and apparatus for utilizing a vehicle wheel alignment system to guide the placement and orientation of a vehicle service apparatus or alignment fixture relative to the thrust line of a vehicle. A laser adapter for projecting a reference line is mounted to a steerable wheel of the vehicle, and is aligned relative to both a line of the vehicle and to the supporting surface on which the vehicle is disposed. The vehicle line is determined by the vehicle wheel alignment system, and the steerable wheel, together with the adapter, are steered relative to the determined vehicle line, such that a projected reference line defined by the position and orientation of the adapter is established parallel to both the supporting surface and the vehicle line. The placement and orientation of the vehicle service apparatus or alignment fixture is subsequently adjusted relative to the projected reference line.

The related art document D3 (Patent Application Pub. No.: US2004165174A1) discloses an adjusting apparatus having an optical aimer that includes a reflector for adjusting parts of a motor vehicle, in particular distance warning radar, headlights, or an axle; having an emitting device that emits a collimated beam; and having a vertical adjusting device for orienting the reflector at a certain angle to a floor of a measuring station forming the contact plane of the vehicle. An exact vertical alignment or orientation at a certain tilt angle to the floor of the measuring station is achieved by simple measures, in that the emitting device is positioned in a vehicle region remote from the aimer, at a specific, defined level of the vehicle above the measuring-station floor and may be adjusted for emitting the beam at different elevation angles relative to a line parallel to the measuring-station floor.

During implementation of the present invention, the applicant finds the following disadvantages of an existing manner demarcating of a center line:
1. Large error as a result of imprecise demarcation. In the existing demarcation manner, two points are respectively marked on the ground in front of and behind an automobile through a plumb line and using centers of a front part and a rear portion of the automobile, such as a logo of the automobile, a license plate of the automobile, wipers of the automobile, a tail antenna of the automobile, a center with equal distances to front wheels or to rear wheels, etc. as central reference points, and a center line of the automobile body is demarcated using the two points as a standard. According to Two Point One Line in geometric mathematics, in the method, the center line of the automobile body can be determined, but the two marked points are merely marks obtained through extension of the central reference points of the automobile body. If an error occurs during extension, the demarcated center line is incorrect. In addition, the extended central reference point of the automobile body is principally based on human eye vision, and a ground reference point varies according to a position of human eyes, resulting in inaccurate demarcated center line.
2. Inconvenient operation. In the existing method, after the extended front and rear reference points on the ground are determined, a rope is required to pass through a bottom of the automobile to be straightened to the determined reference points on the ground respectively, and then the center line of the vehicle is demarcated using the rope as a reference. This method requires cooperation of at least two persons, and it is very inconvenient to make the rope pass through the bottom of the automobile. In addition, introducing the rope as a reference is equivalent to introducing a reference variable, reducing accuracy of demarcation.

### SUMMARY

The present invention is directed to subject matter as defined in the claims.

In order to resolve the foregoing technical problems, embodiments of the present invention provide a device and a method for demarcating a center line of an automobile body facilitating a demarcation operation.

In the embodiments of the present invention, the technical problems are resolved using the following technical solutions.

A device for demarcating a center line of an automobile body is provided according to claim 1.

In the embodiments of the present invention, the technical problems are further resolved using the following technical solutions.

A method for demarcating a center line of an automobile body is provided according to claim 15.

Compared to the prior art, according to the device and the method for demarcating a center line of an automobile body in the embodiments of the present invention, the two lasers are installed on both sides of the to-be-demarcated automobile, two laser beams equidistantly emitted using the center line of the to-be-demarcated automobile irradiate at the horizontal scale, and the holder apparatus is moved to an appropriate position according to a scale value of the horizontal scale, thereby facilitating demarcation of the center line of the automobile.

In addition, according to the device and the method for demarcating a center line of an automobile body in the embodiments of the present invention, the reflecting mirror on one side of the automobile is moved to an irradiating area of the laser on the side, so that the laser point can be reflected back to an incidence direction thereof. The diaphragm is placed at a middle position between the laser and the reflecting mirror, so that an emitted laser beam can pass through the diaphragm groove and irradiates at the reflecting mirror. Therefore, the laser point reflected through the reflecting mirror may return to an emitting point of the laser, facilitating precise demarcation of the center line of the automobile.

### BRIEF DESCRIPTION OF THE DRAWINGS

One or more embodiments are described by way of example with reference to the corresponding figures in the accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.
FIG. 1 is a three-dimensional diagram of a device for demarcating a center line of an automobile according to an embodiment of the present invention;
FIG. 2 is a three-dimensional diagram of a holder apparatus of a demarcation device shown in FIG. 1;
FIG. 3 is a three-dimensional diagram of a holder apparatus shown in FIG. 2 from another perspective;
FIG. 4 is a front view of a holder apparatus shown in FIG. 2;
FIG. 5 is a three-dimensional diagram of a diaphragm of a demarcation device shown in FIG. 1;
FIG. 6 is a three-dimensional diagram of a diaphragm shown in FIG. 5 from another perspective;
FIG. 7 is a three-dimensional diagram of a laser of a demarcation device shown in FIG. 1;
FIG. 8 is a three-dimensional diagram of a laser shown in FIG. 7 from another perspective;
FIG. 9 is a schematic diagram of initial demarcation of a center line of an automobile performed by a demarcation device shown in FIG. 1;
FIG. 10 is a schematic diagram of precise demarcation of a center line of an automobile performed by a demarcation device shown in FIG. 1; and
FIG. 11 is a flowchart of a method for demarcating a center line of an automobile according to another embodiment of the present invention.

### DETAILED DESCRIPTION

For ease of understanding the disclosure, the disclosure is described in further detail below with reference to the accompanying drawings and specific embodiments. It should be noted that an element described as being "fixed" to another element may be directly on the other element, or one or more intervening components may be present. An element described as being "connected" to another element may be directly connected to the other element, or one or more intervening components may be present. As used in the specification, orientation or position relationships indicated by the terms such as "perpendicular", "horizontal", "right", "left", "inside", and "outside" and similar terms and are used only for description.

Unless otherwise defined, all technical and scientific terms used herein have the same meaning as commonly understood by one of ordinary skill in the art to which the disclosure belongs. The terms used in the specification of the disclosure are merely used for describing specific embodiments, and are not intended to limit the disclosure. As used herein, the term "and/or" includes any and all combinations of one or more related items listed.

In addition, the technical features provided in different embodiments of the disclosure to be described below may be combined with each other as long as no conflict occurs.

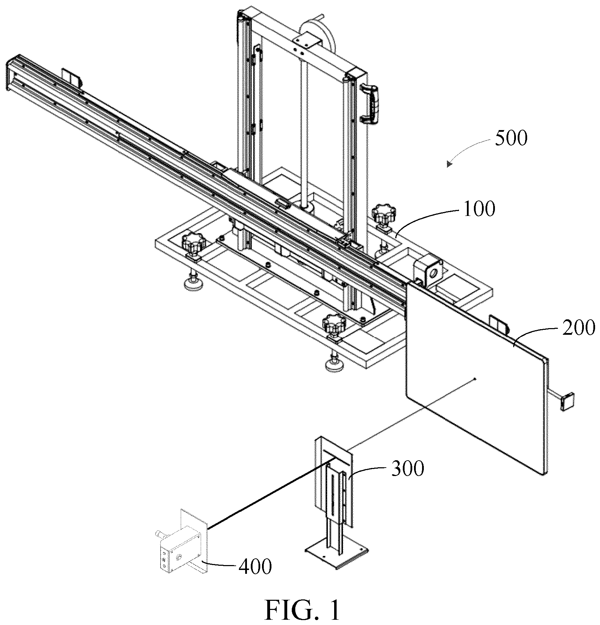

Referring to FIG. 1, a device 500 for demarcating a center line of an automobile according to an embodiment of the present invention includes a holder apparatus 100, a reflecting mirror 200, a diaphragm 300, and a laser 400. The reflecting mirror 200 is installed on the holder apparatus 100. The holder apparatus 100 is configured to support the reflecting mirror 200, and can drive the reflecting mirror 200 to horizontally or vertically move. The laser 400 is configured to emit a laser beam, the diaphragm 300 is configured to control whether the laser beam passes therethrough, and the reflecting mirror 200 is configured to reflect, to the laser 400, the laser beam that passes through the diaphragm 300.

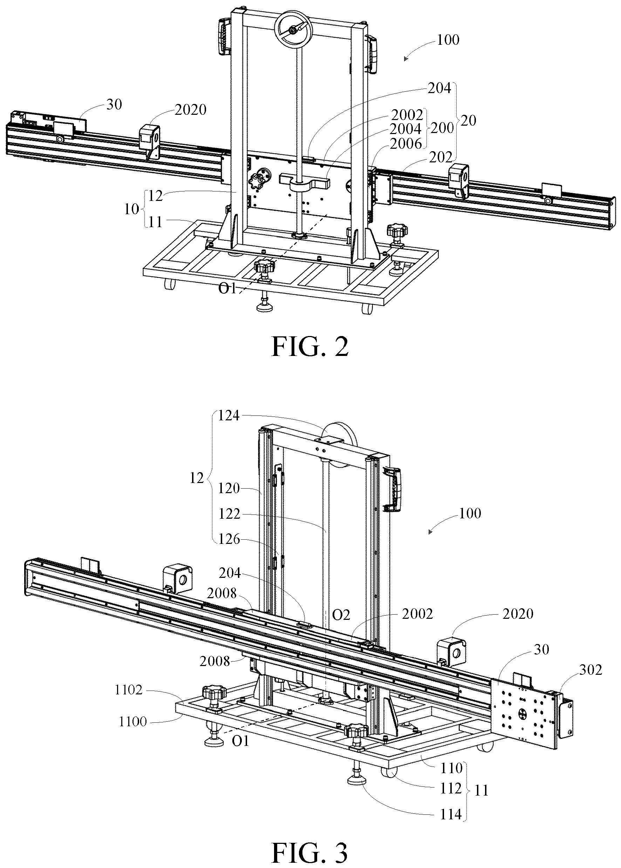

Referring to FIG. 2, the holder apparatus 100 includes a holder assembly 10, a cross beam assembly 20, and a sliding member 30. The cross beam assembly 20 is installed on the holder assembly 10 and may vertically move relative to the holder assembly 10. The sliding member 30 is installed on the cross beam assembly 20 and may horizontally move relative to the cross beam assembly 20. The reflecting mirror 200 is installed on the sliding member 30 and may move horizontally with the sliding member 30 relative to the cross beam assembly 20.

The holder assembly 10 includes a base holder 11 and a vertical-rod support 12. One end of the vertical-rod support 12 is connected to the base holder 11, and the base holder 11 supports the vertical-rod support 12.

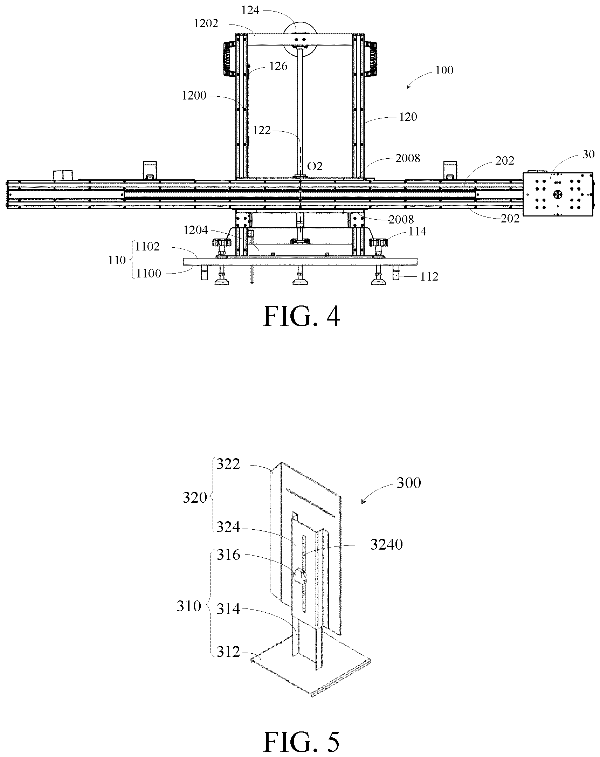

Referring to both FIG. 3 and FIG. 4, the base holder 11 includes a holder body 110, a rolling wheel 112, and a height adjusting member 114. The holder body 110 is a rectangular plate and may be made of metal. A plurality of hollow areas are formed to reduce a weight. The holder body 110 includes a bottom surface 1100 and an upper surface 1102 that are oppositely disposed. The holder body 110 has a central axis O1.

The rolling wheel 112 is installed on the bottom surface 1100 for facilitating movement of the base holder 11. In this embodiment, the rolling wheel 112 is an omni-directional moving wheel, so that the base holder 11 can move toward any direction. There are four rolling wheels 112 that are respectively installed at four corners of the holder body 110. It may be understood that, in some other embodiments, a shape of the holder body 110 may vary according to an actual demand, and is not limited to a rectangle. For example, the holder body 110 may be a circle. There may be more or fewer rolling wheels 112 according to an actual demand, provided that there are at least three rolling wheels.

The height adjusting member 114 is installed on the bottom surface 1100 for adjusting a height of the holder body 110. In this embodiment, the height adjusting member 114 is an adjusting hand wheel, and there are three adjusting hand wheels. The three adjusting hand wheels 114 are distributed in a form of an isosceles triangle. Two adjusting hand wheels 114 located at a bottom edge of the isosceles triangle are disposed on one side of the holder body 110, and are symmetrically disposed along the central axis O1 of the holder body 110. The remaining adjusting hand wheel 114 is disposed on the other side of the holder body 110, and is disposed on the central axis O1 of the holder body 110 (that is, disposed at a top point of a vertex angle of the isosceles triangle). The three adjusting hand wheels 114 can adjust an overall horizontal angle of the holder body 110 through cooperation. Adjusting the adjusting hand wheel 114 located on the central axis O1 of the holder body 110 alone can adjust a pitch angle of the holder body 110.

It may be understood that the height adjusting member 114 may be other apparatuses that can adjust a height. There may be more height adjusting members 114 according to an actual demand, provided that there are at least three height adj usting members. Three of the at least three the height adjusting members 114 are disposed in the foregoing distribution manner.

The vertical-rod support 12 includes a lifting guide rail 120, a lifting screw rod 122, a lifting crank 124, and a height gauge 126.

The lifting guide rail 120 is installed on the holder body 110. The lifting guide rail 120 includes a vertical rod 1200, a horizontal rod 1202, and a bottom rod 1204. The two vertical rods 1200 are vertically disposed in parallel to each other at an interval for guiding the cross beam assembly 20 to move along a vertical direction. The horizontal rod 1202 is horizontally disposed, both ends thereof being respectively mounted to the two vertical rods 1200. The bottom rod 1204 is fixedly mounted on the holder body 110. One end that is of each of the vertical rods 1200 and that is far away from the horizontal rod 1202 is fixedly mounted to the bottom rod 1204.

It may be understood that, in some other embodiments, there may be more or fewer vertical rods 1200 according to an actual demand. For example, there may be one or three vertical rods 1200.

The lifting screw rod 122 is fixedly installed on the lifting guide rail 120 in the vertical direction. One end of the lifting screw rod 122 is fixedly installed at the horizontal rod 1202, and the other end of the lifting screw rod 122 is fixedly installed at the bottom rod 1204.

It may be understood that, in some other embodiments, the bottom rod 1204 may be omitted. One end that is of each of the vertical rod 1200 and that is far away from the horizontal rod 1202 is fixedly mounted on the holder body 110. The lifting screw rod 122 is fixedly mounted on the lifting guide rail 120 in the vertical direction. One end of the lifting screw rod 122 is installed at the horizontal rod 1202, and the other end of the lifting screw rod 122 is installed at the holder body 110.

The lifting crank 124 is installed at the horizontal rod 1202, and is connected to the lifting screw rod 122 for rotation, thereby driving the lifting screw rod 122 to rotate around a central axis of the lifting screw rod. In this embodiment, a connecting rod of the lifting crank 124 is perpendicular to the lifting screw rod 122, and is connected to the lifting screw rod 122 through a gear structure. It may be understood that, in some other embodiments, the connecting rod of the lifting crank 124 may be coaxial with the lifting screw rod 122, and the connecting rod of the lifting crank 124 is directly connected to the lifting screw rod 122. Alternatively, the lifting crank 124 may be replaced with other apparatuses for driving the lifting screw rod 122 to rotate, for example, a motor, etc.

The height gauge 126 is vertically installed at the vertical rod 1200. The height gauge 126 has a graduation and is configured to measure a distance by which the cross beam assembly 20 vertically moves.

The cross beam assembly 20 includes a supporting member 200, a guide rail 202, and a level gauge 204. The supporting member 200 is installed on the lifting guide rail 120. Under guidance of the lifting guide rail 120, the supporting member 200 can vertically move relative to the lifting guide rail 120. The guide rail 202 is fixedly installed on the supporting member 200 and may vertically move with the supporting member 200 relative to the lifting guide rail 120. The sliding member 30 is installed on the guide rail 202 and may horizontally move relative to the guide rail 202.

The supporting member 200 includes a supporting body 2002, a moving block 2004, and a sliding block 2006.

The supporting body 2002 is approximately plate-shaped. Two clamping portions 2008 respectively extend from two opposite sides of the supporting body. The two clamping portions 2008 are strip-shaped and are horizontally disposed in parallel to each other at an interval.

The moving block 2004 is fixedly mounted on the supporting body 2002 and is sleeved around the lifting screw rod 122. The moving block 2004 is in screw-thread fit with the lifting screw rod 122. When the lifting screw rod 122 rotates around a central axis thereof, the moving block 2004 may be driven to move along the lifting screw rod 122 in the vertical direction, thereby driving the cross beam assembly 20 to vertically move. The moving block 2004 and the clamping portion 2008 are respectively located on two opposite sides of the supporting body 2002.

The sliding block 2006 is fixedly mounted on the supporting body 2002. The sliding block 2006 and the moving block 2004 are located on a same side of the supporting body 2002. At least one sliding block 2006 is correspondingly installed on each of the vertical rods 1200. Each sliding block 2006 is movably installed on a corresponding vertical rod 1200, and may slide along the corresponding vertical rod 1200. In the embodiment, two sliding blocks 2006 are correspondingly installed on each of the vertical rods 1200. It may be understood that, in some other embodiments, according to an actual demand, there may be more or fewer sliding blocks 2006 correspondingly installed on each of the vertical rods 1200. For example, the number of the sliding block may be decreased to one or increased to three.

Two guide rails 202 are correspondingly installed on the two clamping portions 2008 respectively, and are horizontally disposed in parallel to each other at an interval of a preset distance. On both sides of the guide rail 202, there are horizontal scales 2020 that extend along both sides respectively. The horizontal scales use a center of the guide rail as a zero point. Alternatively, the horizontal scales 2020 are disposed at both ends of the guide rail 202. Therefore, positioning of a location of the sliding member is facilitated. A central axis O2 of the guide rail 202 and the central axis O1 of the holder body 110 are at a same plane. It may be understood that, in some other embodiments, there may be more or fewer guide rails 202 according to an actual demand. For example, the number of the guide rail may be decreased one or increased to three. The guide rail 202 may also be fixedly mounted on the supporting member 200 in any other appropriate manner. For example, the clamping portion 2008 is omitted, and the guide rail 202 is directly welded on the supporting body 2002.

The level gauge 204 is installed on an upper side of the clamping portion 2008 for detecting whether the clamping portion 2008 is horizontally disposed, thereby determining whether the guide rail 202 is horizontally disposed. It may be understood that, in some other embodiments, the level gauge 204 may also be installed on the guide rail 202 or installed on other portions of the cross beam assembly 20, provided that the level gauge can be configured to detect whether the guide rail 202 is horizontally disposed.

The sliding member 30 is movably installed on the guide rail 202 and may horizontally move along the guide rail 202. In the embodiment, the sliding member 30 is movably installed on the guide rail 202 through a sliding bearing 302. The sliding member 30 includes several mounting points for installing the reflecting mirror 200. It may be understood that, in some other embodiments, the sliding member 30 may be movably installed on the guide rail 202 in other appropriate manners. For example, the sliding bearing 302 is omitted, and the sliding member 30 is directly installed on the guide rail 202.

Referring to FIG. 1, the reflecting mirror 200 is installed on a mounting point. The reflecting mirror 200 is rectangularly tabular, and includes a reflecting face configured to reflect, to the laser 400, a laser beam that passes through the diaphragm 300.

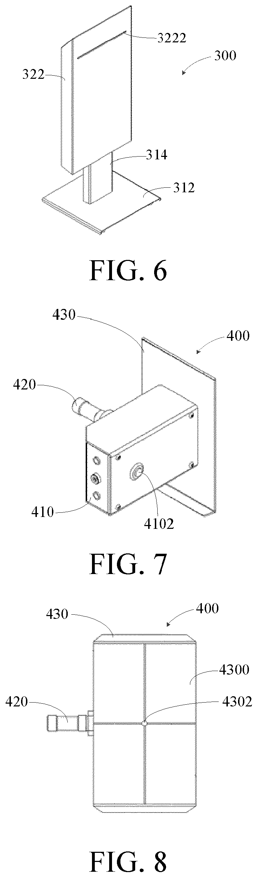

Referring to both FIG. 5 and FIG. 6, the diaphragm 300 includes a fixing base 310 and a sliding diaphragm 320.

The fixing base 310 includes a base 312, a fixing support 314, and a locking handle 316. The base 312 is rectangularly tabular. One end of the fixing support 314 is installed at a center of the base 312, and the fixing support 314 is perpendicular to the base 312. The fixing support 314 is strip-shaped. The locking handle 316 is installed on the fixing support 314.

The sliding diaphragm 320 includes a diaphragm portion 322 and a sliding groove portion 324. The diaphragm portion 322 is approximately tabular and provided with a strip-shaped diaphragm groove 3222 for allowing a laser beam to pass therethrough. A width of the diaphragm groove 3222 is slightly less than a diameter of a laser point emitted by the laser 400, so as to detect whether the laser beam just passes through the diaphragm groove 3222. The sliding groove portion 324 is installed at the diaphragm portion 322 and is strip-shaped, and is sleeved around the fixing support 314. The sliding groove portion 324 may slide relative to the fixing support 314. The sliding groove portion 324 is provided with a strip-shaped groove 3240. The locking handle 316 passes through the groove 3240 for stably fixing the sliding diaphragm 320 on the fixing base 310.

Referring to both FIG. 7 and FIG. 8, the laser 400 is a wheel laser, including an emitting portion 410, an installing shaft 420, and an observing target 430. The emitting portion 410 is configured to emit a laser beam, and the emitting portion 410 includes a switch 4102 for turning on or turning off the emitting portion 410. The installing shaft 420 is installed on the emitting portion 410 for installing the wheel laser 400 on a wheel of the automobile. The observing target 430 is mounted on the emitting portion 410. The observing target 430 is a rectangular plate, and includes an observing target face 4300 for displaying a position of a laser beam reflected back through the reflecting mirror 200. An emitting hole 4302 is provided at a center of the observing target face 4300 for allowing a laser beam to be emitted.

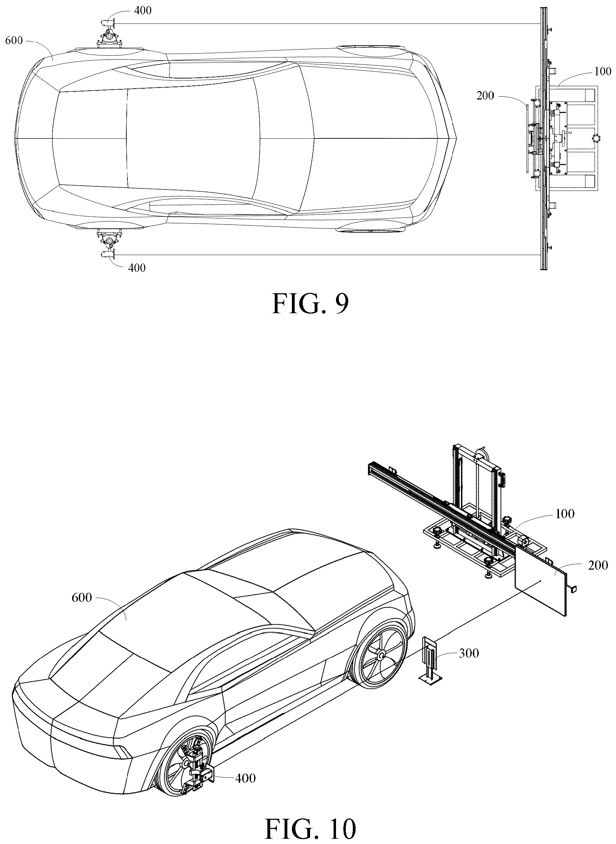

Referring to FIG. 9, in a first step, the holder apparatus 100 is moved to a position in front of a to-be-demarcated automobile 600 through the rolling wheel 112 and is one meter away from the to-be-demarcated automobile. The reflecting mirror 200 is installed on the sliding member 30, and is moved to a center of the guide rail 202 (that is, a vertically central axis of the reflecting mirror 200 and the central axis O2 of the guide rail 202 are at a same plane), and the guide rail 202 is parallel to an axle of the automobile 600. Wheel clamps are respectively installed on rear wheels of the automobile 600, and the lasers 400 are respectively mounted on the wheel clamps. The lasers 400 are turned on to respectively cast a laser beam on both ends of the guide rail 202. Angles of the lasers 400 are adjusted, so that laser points fall on the horizontal scales 2020 on both ends of the guide rail 202, and readings of laser points on both ends are recorded. If the readings are the same, the central axis O2 of the guide rail 202 is at the center line of the automobile 600. If the readings are different, the holder apparatus 100 is horizontally moved until the readings are the same. At this moment, only initial alignment of the center line is completed. Since there is a specific angle difference between the guide rail 202 and the axle, and the angle difference cannot be removed using the foregoing method, precise demarcation of the center line of the automobile 600 needs to be further performed.

Referring to FIG. 10, in a second step, the reflecting mirror 200 is moved to one end of the guide rail 202, so that the laser on the same side as the reflecting mirror 200 can irradiate at a reflecting surface of the reflecting mirror. The diaphragm 300 is placed at a middle position between the laser 400 and the reflecting mirror 200, and the diaphragm portion 322 is perpendicular to the laser beam. The diaphragm groove 3222 is adjusted to be as high as the emitting hole 4302 of the laser 400. An angle at which the laser 400 is emitted is adjusted, and a position of the diaphragm 300 is properly moved, so that the laser beam can pass through a center of the diaphragm groove 3222. A position of the reflecting mirror 200 is adjusted according to a practical situation, so that the current laser beam can irradiate at the reflecting mirror 200. A position of a laser point reflected back is observed, and the height adjusting member 114 is adjusted, so that the laser beam reflected through the reflecting mirror 200 can just return back along an original path and be projected to the emitting hole 4302 of the laser 400.

After the foregoing step is completed, the reflecting mirror 200 is moved to the center of the guide rail 202. It is determined again whether graduations of the projections of the lasers 400 on both sides of the guide rail 202 are the same. If yes, it indicates that demarcation of the center line and a vertical face thereof of the automobile 600 is completed. Otherwise, the foregoing second step is required to be repeated.

It may be understood that, in some other embodiments, the holder apparatus 100 may be disposed at a rear portion of the automobile 600, and the two laser 400 are installed on two front wheels of the automobile 600, so that the center line of the automobile 600 can be also demarcated at the rear portion of the automobile 600. Alternatively, the holder apparatus 100 may be disposed at a front portion or a rear portion of the automobile 600, and the two lasers 400 are installed at two positions that are symmetrically disposed along the center line of the automobile 600, so that the center line of the automobile 600 can also be demarcated at the front portion or the rear portion of the automobile 600.

Compared to the prior art, according to the device 500 for demarcating a center line of an automobile in this embodiment of the present invention, the two lasers 400 may be installed on wheels on both sides of the automobile 600, two laser beams equidistantly emitted using the wheels as reference points irradiate at the horizontal scales 2020 of the guide rail 202, and the guide rail 202 is moved to an appropriate position according to graduations of the horizontal scales 2020, so that readings of the irradiated lasers on both sides are the same, thereby facilitating initial demarcation of the center line of the automobile 600.

In addition, at one side of the automobile 600, the reflecting mirror 200 is then moved to an irradiation area of the laser 400 at the one side, so that a laser point can be reflected back to an incidence direction thereof. The diaphragm 300 is placed at a middle position between the laser 400 and the reflecting mirror 200, the diaphragm portion 322 is perpendicular to the laser beam, and a height of the diaphragm groove 3222 is adjusted to a height of the laser 400. An angle at which the laser 400 is emitted is first adjusted, so that an emitted laser beam can pass through the diaphragm groove 3222 and irradiate at the reflecting mirror 200. The height adjusting member 114 is adjusted, so that the laser point reflected through the reflecting mirror 200 can return to an emitting point of the laser 400, facilitating precise demarcation of the center line of the automobile 600.

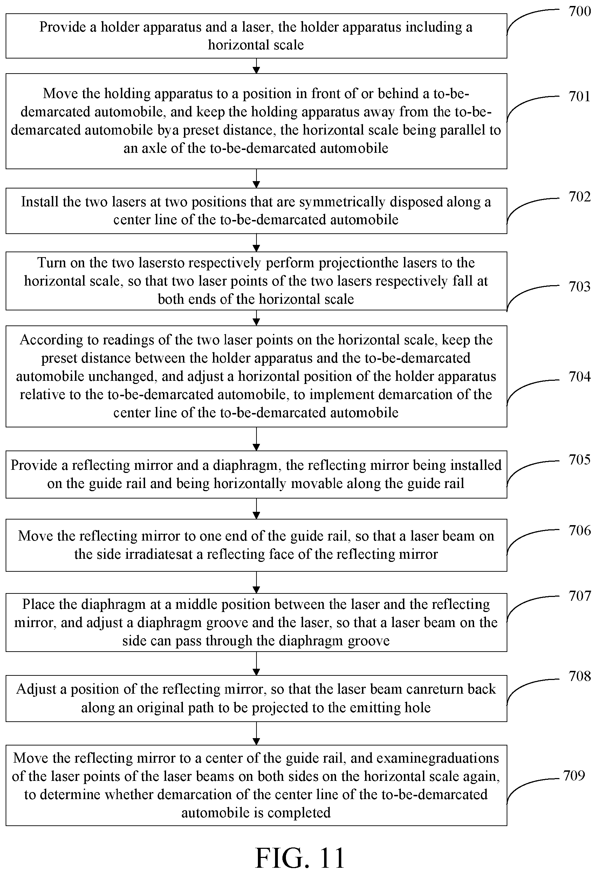

Another embodiment of the present invention provides a method for demarcating a center line of an automobile. The method is implemented using the foregoing device 500 for demarcating a center line of an automobile provided in the foregoing embodiment. Referring to FIG. 11, the method includes the following steps.

700: A holder apparatus and a laser are provided, the holder apparatus including a horizontal scale.

701: The holder apparatus is moved to a position in front of or behind a to-be-demarcated automobile, and the holder apparatus is kept away from the to-be-calibrated automobile by a preset distance, the horizontal scale being parallel to an axle of the to-be-demarcated automobile.

The holder apparatus 100 is moved to a front portion of the to-be-calibrated automobile 600 through the rolling wheel 112, and is about one meter away from the to-be-calibrated automobile. The horizontal scale 2020 is horizontally disposed in parallel to an axle of the to-be-demarcated automobile 600.

702: The two lasers are installed at two positions that are symmetrically disposed along a center line of the to-be-demarcated automobile.

For example, wheel clamps may be respectively installed on rear wheels of the to-be-demarcated automobile 600, and the two lasers 400 are installed on the wheel clamps.

703: The two lasers are turned on to respectively cast a laser beam on the horizontal scale, so that two laser points of the two lasers respectively fall on both ends of the horizontal scale.

Angles of the lasers 400 are adjusted, so that the laser points fall on both ends of the horizontal scale 2020.

704: According to readings of the two laser points on the horizontal scale, the preset distance between the holder apparatus and the to-be-calibrated automobile is kept unchanged, and a horizontal position of the holder apparatus relative to the to-be-demarcated automobile is adjusted, so as to implement demarcation of the center line of the to-be-demarcated automobile.

Readings of the laser points on both ends of the horizontal scale 2020 are recorded. If the readings are the same, a center of the horizontal scale 2020 is at a center line of the to-be-demarcated automobile 600. If the readings are different, the holder apparatus 100 is horizontally moved until the readings are the same.

At this moment, only initial alignment of the center line is completed. Since there is a specific angle difference between the horizontal scale 2020 and the axle, and the angle difference cannot be removed using the foregoing method. Therefore, precise demarcation of the center line of the automobile 600 needs to be further performed. In some embodiments, the holder apparatus 100 includes a guide rail 202, the horizontal scale 2020 is disposed on the guide rail 202. The horizontal scales 2020 extend along both sides of the guide rail 202 respectively using a center of the guide rail 202 as a zero point. The laser 400 includes an emitting hole 4302. The method further includes the following steps.

705: A reflecting mirror and a diaphragm are provided. The reflecting mirror is installed on the guide rail and is horizontally movable along the guide rail.

706: The reflecting mirror is moved to one end of the guide rail, so that a laser beam on the same side as the reflecting mirror irradiates at a reflecting face of the reflecting mirror.

707: The diaphragm is placed at a middle position between the laser and the reflecting mirror, and the diaphragm groove and the laser are adjusted, so that a laser beam on the same side as the reflecting mirror can pass through the diaphragm groove.

The diaphragm 300 is placed at a middle position between the laser 400 and the reflecting mirror 200, and the diaphragm portion 322 is perpendicular to the laser beam. The diaphragm groove 3222 is adjusted to be as high as the emitting hole 4302 of the laser 400. An angle at which the laser 400 is emitted is adjusted, and a position of the diaphragm 300 is properly moved, so that the laser beam can pass through a center of the diaphragm groove 3222.

708: A position of the reflecting mirror is adjusted, so that the laser beam can return back along an original path to project on the emitting hole.

A position of the reflecting mirror 200 is adjusted according to a practical situation, so that the current laser beam can irradiate at the reflecting mirror 200. A position of a laser point reflected back is observed, and the reflecting mirror 200 is adjusted, so that the laser beam reflected from the reflecting mirror 200 can return back along an original path to be projected to the emitting hole 4302 of the laser 400.

709: The reflecting mirror is moved to a center of the guide rail, graduations of the laser points of the laser beams on both sides on the horizontal scale are examined again, to determine whether demarcation of the center line of the to-be-calibrated automobile is completed.

The reflecting mirror 200 is moved to the center of the guide rail 202. It is determined again whether projected scale values of the laser points of the laser beams on the horizontal scale 2020 are the same. If yes, it indicates that demarcation of the center line and a vertical face of the automobile 600 is completed.

It should be noted that, in the embodiments of the present invention, the method is implemented using the device 500 for demarcating a center line of an automobile provided in the foregoing embodiment. For technical details that are not described in detail in the method embodiments, reference may be made to the descriptions of the device 500 for demarcating a center line of an automobile provided in the embodiments of the present invention.

Compared to the prior art, in the method for demarcating a center line of an automobile in the embodiments of the present invention, two laser beams equidistantly emitted from the center line of the to-be-calibrated automobile 600 irradiate at the horizontal scales 2020, and a horizontal position of the holder apparatus 100 relative to the to-be-demarcated automobile 600 is adjusted according to the graduations of the horizontal scales 2020, thereby facilitating initial demarcation of the center line of the to-be-demarcated automobile 600.

In addition, on one side of the to-be-calibrated automobile 600, the reflecting mirror and the diaphragm 300 may be used to facilitate precise demarcation of the center line of the automobile 600.

It should be finally noted that the above embodiments are merely intended for describing the technical solutions of the present invention rather than limiting the present invention. Based on the idea of the disclosure, the technical features in the foregoing embodiments or different embodiments may be combined, the steps may be implemented in any order, and many other changes in the different aspects of the disclosure as described above may exist. For brevity, such changes are not provided in the detailed descriptions. Although the disclosure is described in detail with reference to the foregoing embodiments, those of ordinary skill in the art should understand that they can still make modifications to the technical solutions described in the foregoing embodiments.

## Claims

1. A device (500) for demarcating a center line of an automobile (600), the device (500) comprises:
a holder apparatus (100) comprising a holder assembly (10) and a cross beam assembly (20) mounted on the holder assembly (10), the cross beam assembly (20) being movable relative to the holder assembly (10) along a vertical direction, the cross beam assembly (20) comprising a guide rail (202), the guide rail (202) being horizontally disposed, wherein horizontal scales (2020) are respectively disposed on both sides of the guide rail (202); and
two lasers (400) configured to cast two laser beams on the horizontal scales (2020),
wherein the two lasers (400) are configured to be respectively disposed on both sides of a automobile(600);
a reflecting mirror (200) installed on the holder apparatus (100), wherein the holder apparatus (100) is configured to support the reflecting mirror (200) and drive the reflecting mirror (200) to horizontally or vertically move; and
a diaphragm (300) configured to control the laser beams to pass through the diaphragm (300), the reflecting mirror (200) configured to reflect the laser beams passing through the diaphragm (300) to the two lasers (400), wherein the diaphragm (300) comprises a fixing base (310) and a sliding diaphragm (320), the sliding diaphragm (320) being installed on the fixing base (310), and a position of the sliding diaphragm (320) on the fixing base (310) is adjustable;
wherein the holder assembly (10) is configured to be adjustable so that readings of two laser points of the two lasers (400) on the horizontal scales (2020) are the same.

2. The device (500) according to claim 1, wherein the two lasers (400) are configured to be mounted at two positions that are symmetrically disposed along the center line of a automobile (600).

3. The device (500) according to claim 1, further comprising wheel clamps configured to be respectively mounted on rear wheels or front wheels of the automobile (600);
wherein the two lasers (400) are respectively mounted on the wheel clamps.

4. The device (500) according to any of claims 1 to 3, wherein each of the two lasers (400) comprises:
an emitting portion (410) configured to emit a laser beam to a corresponding horizontal scale of the horizontal scales (2020);
an installing shaft (420) installed on the emitting portion (410) for installing the laser (400) on a wheel of the automobile; and
an observing target (430) mounted on the emitting portion (410), the observing target (430) comprising an observing target face (4300), an emitting hole (4302) being provided on the observing target face (4300) to allow the laser beam to be emitted.

5. The device (500) according to claim 4, wherein the observing target face (4300) is configured to display a position of a laser beam.

6. The device (500) according to claim 4 or 5, wherein the observing target (430) is a rectangular plate.

7. The device (500) according to any of claims 4 to 6, wherein the emitting hole (4302) is provided at a center of the observing target face (4300).

8. The device (500) according to any of claims 4 to 7, wherein the emitting portion (410) comprises a switch (4102) configured to turn on or turn off the emitting portion (410).

9. The device (500) according to any of claims 4 to 8, wherein the each of the two lasers (400) further comprises an installing shaft (420) installed on the emitting portion (410), the installing shaft (420) being configured to mount the each of the two lasers (400).

10. The device (500) according to any of claims 1 to 9, wherein the holder assembly (10) comprises:
a base holder (11); and
a vertical-rod support (12) mounted on the base holder (11), the vertical-rod support (12) comprising a lifting screw rod (122), the lifting screw rod (122) being configured to drive the cross beam assembly (20) to move along the lifting screw rod (122) in the vertical direction when the lifting screw rod (122) rotates.

11. The device (500) according to claim 10, wherein the holder assembly (10) further comprises a motor configured to drive the lifting screw rod (122) to rotate.

12. The device (500) according to claim 10 or 11, wherein the vertical-rod support (12) comprises two vertical rods (1200), the two vertical rods (1200) being vertically disposed in parallel to each other at an interval, the two vertical rods (1200) being configured to guide the cross beam assembly (20) to move along the vertical direction.

13. The device (500) according to claim 12, wherein the cross beam assembly (20) comprises a supporting member (200), the supporting member (200) comprising:
a supporting body (2002), the guide rail (202) being mounted on the supporting body (2002);
a moving block (2004) fixedly mounted on the supporting body (2002), the moving block (2004) being in screw-thread fit with the lifting screw rod (122), the lifting screw rod (122) being configured to drive the moving block (2004) to move along the lifting screw rod (122) in the vertical direction; and
a sliding block (2006) fixedly mounted on the supporting body (2002), the sliding block (2006) being movably installed on each of the two vertical rods (1200).

14. The device (500) according to claim 13, wherein two sliding blocks (2006) are movably installed on each of the two vertical rods (1200).

15. A method for demarcating a center line of an automobile (600), the method comprises:
providing a holder apparatus (100) and two lasers (400), the holder apparatus (100) comprising a guide rail (202), horizontal scales (2020) being respectively disposed on both sides of the guide rail (202);
moving the holder apparatus (100) to a position in front of or behind the automobile (600);
keeping the holder apparatus (100) away from the automobile (600) by a preset distance, the horizontal scales (2020) being parallel to an axle of the automobile (600);
installing the two lasers (400) at two positions that are symmetrically disposed along the center line of the automobile (600);
turning on the two lasers (400) to respectively cast a laser beam on the horizontal scales, so that two laser points of the two lasers (400) respectively fall on the horizontal scales (2020);
according to readings of the two laser points on the horizontal scales (2020), keeping the preset distance between the holder apparatus (100) and the automobile (600) unchanged, and adjusting a horizontal position of the holder apparatus (100) relative to the automobile (600) so that readings of the two laser points on the horizontal scales (2020) are the same;
**characterised by**
providing a reflecting mirror (200) and a diaphragm (300), the reflecting mirror (200) being installed on the guide rail (202) and being horizontally movable along the guide rail (202);
moving the reflecting mirror (200) to one end of the guide rail (202), so that the laser beam on the same side as the reflecting mirror (200) irradiates at a reflecting face of the reflecting mirror (200);
placing the diaphragm (300) at a middle position between the laser and the reflecting mirror (200), and adjusting the diaphragm (300) and the lasers (400), so that the laser beam on the same side as the reflecting mirror (200) passing through the diaphragm (300);
adjusting a position of the reflecting mirror (200), so that the laser beams return back along an original path to project on the two lasers (400) respectively; and
moving the reflecting mirror (200) to a center of the guide rail (202), examining graduations of the laser points of the laser beams on both sides on the horizontal scales (2020) again, to determine whether demarcation of the center line of the automobile (600) is completed.

## Patentansprüche

1. Vorrichtung (500) zum Abgrenzen einer Mittellinie eines Kraftfahrzeugs (600), wobei die Vorrichtung (500) umfasst:
eine Haltevorrichtung (100), die eine Halterungsbaugruppe (10) und eine an der Halterungsbaugruppe (10) angebrachte Querträgerbaugruppe (20) umfasst, wobei die Querträgerbaugruppe (20) relativ zu der Halterungsbaugruppe (10) entlang einer vertikalen Richtung beweglich ist, wobei die Querträgerbaugruppe (20) eine Führungsschiene (202) umfasst, wobei die Führungsschiene (202) horizontal angeordnet ist, wobei horizontale Skalen (2020) jeweils auf beiden Seiten der Führungsschiene (202) angeordnet sind; und
zwei Laser (400), die so konfiguriert sind, dass sie zwei Laserstrahlen auf die horizontalen Skalen (2020) werfen,
wobei die beiden Laser (400) so konfiguriert sind, dass sie jeweils auf beiden Seiten eines Automobils (600) angeordnet sind;
einen reflektierenden Spiegel (200), der an der Haltevorrichtung (100) installiert ist, wobei die Haltevorrichtung (100) so konfiguriert ist, dass sie den reflektierenden Spiegel (200) trägt und den reflektierenden Spiegel (200) zu einer horizontalen oder vertikalen Bewegung antreibt; und
eine Blende (300), die so konfiguriert ist, dass sie die durch die Blende (300) hindurchtretenden Laserstrahlen steuert, wobei der reflektierende Spiegel (200) so konfiguriert ist, dass er die durch die Blende (300) hindurchtretenden Laserstrahlen zu den beiden Lasern (400) reflektiert, wobei die Blende (300) eine Befestigungsbasis (310) und eine verschiebbare Blende (320) umfasst, wobei die verschiebbare Blende (320) an der Befestigungsbasis (310) installiert ist und eine Position der verschiebbaren Blende (320) an der Befestigungsbasis (310) einstellbar ist;
wobei die Halterungsbaugruppe (10) so konfiguriert ist, dass sie so einstellbar ist, dass die Ablesungen von zwei Laserpunkten der beiden Laser (400) auf den horizontalen Skalen (2020) gleich sind.

2. Vorrichtung (500) nach Anspruch 1, wobei die beiden Laser (400) so konfiguriert sind, dass sie an zwei Positionen montiert werden, die symmetrisch entlang der Mittellinie eines Automobils (600) angeordnet sind.

3. Die Vorrichtung (500) nach Anspruch 1 umfasst ferner Radklammern, die so konfiguriert sind, dass sie jeweils an den Hinterrädern oder den Vorderrädern des Kraftfahrzeugs (600) angebracht werden können;
wobei die beiden Laser (400) jeweils an den Radklammern angebracht sind.

4. Vorrichtung (500) nach einem der Ansprüche 1 bis 3, wobei jeder der beiden Laser (400) umfasst:
einen emittierenden Abschnitt (410), der so konfiguriert ist, dass er einen Laserstrahl zu einer entsprechenden horizontalen Skala der horizontalen Skalen (2020) emittiert; einen Installationsschaft (420), der an dem emittierenden Abschnitt (410) installiert ist, um den Laser (400) an einem Rad des Automobils zu installieren; und
ein Beobachtungsziel (430), das auf dem emittierenden Abschnitt (410) angebracht ist, wobei das Beobachtungsziel (430) eine Beobachtungszielfläche (4300) umfasst, wobei ein Emissionsloch (4302) auf der Beobachtungszielfläche (4300) vorgesehen ist, um die Emission des Laserstrahls zu ermöglichen.

5. Vorrichtung (500) nach Anspruch 4, wobei die Beobachtungszielfläche (4300) so konfiguriert ist, dass sie eine Position eines Laserstrahls anzeigt.

6. Die Vorrichtung (500) nach Anspruch 4 oder 5, wobei das Beobachtungsziel (430) eine rechteckige Platte ist.

7. Die Vorrichtung (500) nach einem der Ansprüche 4 bis 6, wobei das Emissionsloch (4302) in der Mitte der Beobachtungsfläche (4300) vorgesehen ist.

8. Die Vorrichtung (500) nach einem der Ansprüche 4 bis 7, wobei der emittierende Abschnitt (410) einen Schalter (4102) umfasst, der so konfiguriert ist, dass er den emittierenden Abschnitt (410) ein- oder ausschaltet.

9. Vorrichtung (500) nach einem der Ansprüche 4 bis 8, wobei jeder der beiden Laser (400) ferner einen Installationsschaft (420) umfasst, der an dem emittierenden Abschnitt (410) installiert ist, wobei der Installationsschaft (420) so konfiguriert ist, dass er jeden der beiden Laser (400) montiert.

10. Vorrichtung (500) nach einem der Ansprüche 1 bis 9, wobei die Halterungsbaugruppe (10) umfasst:
eine Basishalterung (11); und
eine Vertikalstangenhalterung (12), die an der Basishalterung (11) angebracht ist, wobei die Vertikalstangenhalterung (12) eine Hebeschraubenstange (122) umfasst, wobei die Hebeschraubenstange (122) so konfiguriert ist, dass sie die Querträgerbaugruppe (20) so antreibt, dass sie sich entlang der Hebeschraubenstange (122) in der vertikalen Richtung bewegt, wenn sich die Hebeschraubenstange (122) dreht.

11. Vorrichtung (500) nach Anspruch 10, wobei die Halterungsbaugruppe (10) ferner einen Motor umfasst, der so konfiguriert ist, dass er die Hubspindelstange (122) zum Drehen antreibt.

12. Vorrichtung (500) nach Anspruch 10 oder 11, wobei die Vertikalstangenhalterung (12) zwei Vertikalstangen (1200) umfasst, wobei die beiden Vertikalstangen (1200) vertikal parallel zueinander in einem Abstand angeordnet sind, wobei die beiden Vertikalstangen (1200) so konfiguriert sind, dass sie die Querträgeranordnung (20) so führen, dass sie sich entlang der vertikalen Richtung bewegt.

13. Vorrichtung (500) nach Anspruch 12, wobei die Querträgeranordnung (20) ein Stützelement (200) umfasst, wobei das Stützelement (200) umfasst:
einen Trägerkörper (2002), wobei die Führungsschiene (202) auf dem Trägerkörper (2002) montiert ist;
einen beweglichen Block (2004), der fest an dem Stützkörper (2002) angebracht ist, wobei der bewegliche Block (2004) in Gewindepassung mit der Hubspindelstange (122) ist, wobei die Hubspindelstange (122) so konfiguriert ist, dass sie den beweglichen Block (2004) antreibt, um sich entlang der Hubspindelstange (122) in der vertikalen Richtung zu bewegen; und
einen Gleitblock (2006), der fest auf dem Trägerkörper (2002) montiert ist, wobei der Gleitblock (2006) beweglich auf jeder der beiden vertikalen Stangen (1200) angebracht ist.

14. Vorrichtung (500) nach Anspruch 13, bei der zwei Nutensteine (2006) auf jeder der beiden vertikalen Stangen (1200) beweglich angebracht sind.

15. Verfahren zum Abgrenzen einer Mittellinie eines Automobils (600), wobei das Verfahren umfasst: Bereitstellen einer Haltevorrichtung (100) und zweier Laser (400), wobei die Haltevorrichtung (100) eine Führungsschiene (202) umfasst, wobei horizontale Skalen (2020) jeweils auf beiden Seiten der Führungsschiene (202) angeordnet sind;
Bewegen der Haltevorrichtung (100) in eine Position vor oder hinter dem Kraftfahrzeug (600);
Halten der Haltevorrichtung (100) in einem vorgegebenen Abstand zum Fahrzeug (600), wobei die horizontalen Skalen (2020) parallel zu einer Achse des Fahrzeugs (600) verlaufen;
Installation der beiden Laser (400) an zwei Positionen, die symmetrisch entlang der Mittellinie des Automobils (600) angeordnet sind;
Einschalten der beiden Laser (400), um jeweils einen Laserstrahl auf die horizontalen Skalen zu werfen, so dass zwei Laserpunkte der beiden Laser (400) jeweils auf die horizontalen Skalen (2020) fallen;
entsprechend den Ablesungen der beiden Laserpunkte auf den horizontalen Skalen (2020), wobei der voreingestellte Abstand zwischen der Haltevorrichtung (100) und dem Fahrzeug (600) unverändert bleibt, und Einstellen einer horizontalen Position der Haltevorrichtung (100) relativ zu dem Fahrzeug (600), so dass die Ablesungen der beiden Laserpunkte auf den horizontalen Skalen (2020) gleich sind; **gekennzeichnet durch**
Bereitstellen eines reflektierenden Spiegels (200) und einer Blende (300), wobei der reflektierende Spiegel (200) auf der Führungsschiene (202) installiert ist und horizontal entlang der Führungsschiene (202) bewegt werden kann;
Bewegen des Reflexionsspiegels (200) zu einem Ende der Führungsschiene (202), so dass der Laserstrahl auf der gleichen Seite wie der Reflexionsspiegel (200) auf eine reflektierende Fläche des Reflexionsspiegels (200) einstrahlt;
Anordnen der Blende (300) in einer mittleren Position zwischen dem Laser und dem reflektierenden Spiegel (200) und Einstellen der Blende (300) und des Lasers (400), so dass der Laserstrahl auf der gleichen Seite wie der reflektierende Spiegel (200) durch die Blende (300) hindurchgeht;
Einstellen einer Position des Reflexionsspiegels (200), so dass die Laserstrahlen entlang eines ursprünglichen Pfades zurückkehren, um jeweils auf die beiden Laser (400) zu projizieren; und
Bewegen des Reflexionsspiegels (200) in die Mitte der Führungsschiene (202), erneutes Überprüfen der Teilungen der Laserpunkte der Laserstrahlen auf beiden Seiten auf den horizontalen Skalen (2020), um festzustellen, ob die Abgrenzung der Mittellinie des Automobils (600) abgeschlossen ist.

## Revendications

1. Dispositif (500) pour délimiter une ligne centrale d'une automobile (600), le dispositif (500) comprend :
un appareil de support (100) comprenant un ensemble de support (10) et un ensemble de traverse (20) monté sur l'ensemble de support (10), l'ensemble de traverse (20) étant mobile par rapport à l'ensemble de support (10) le long d'une direction verticale, l'ensemble de traverse (20) comprenant un rail de guidage (202), le rail de guidage (202) étant disposé horizontalement, dans lequel des échelles horizontales (2020) sont respectivement disposées des deux côtés du rail de guidage (202) ; et
deux lasers (400) configurés pour projeter deux faisceaux laser sur les échelles horizontales (2020),
les deux lasers (400) sont configurés pour être disposés respectivement de part et d'autre d'une automobile (600) ;
un miroir réfléchissant (200) installé sur l'appareil de support (100), dans lequel l'appareil de support (100) est configuré pour supporter le miroir réfléchissant (200) et entraîner le miroir réfléchissant (200) à se déplacer horizontalement ou verticalement ; et
un diaphragme (300) configuré pour contrôler le passage des faisceaux laser à travers le diaphragme (300), le miroir réfléchissant (200) configuré pour réfléchir les faisceaux laser passant à travers le diaphragme (300) vers les deux lasers (400), le diaphragme (300) comprenant une base de fixation (310) et un diaphragme coulissant (320), le diaphragme coulissant (320) étant installé sur la base de fixation (310), et une position du diaphragme coulissant (320) sur la base de fixation (310) étant ajustable ;
dans lequel l'ensemble de support (10) est configuré pour être réglable de manière à ce que les lectures de deux points laser des deux lasers (400) sur les échelles horizontales (2020) soient les mêmes.

2. Dispositif (500) selon la revendication 1, dans lequel les deux lasers (400) sont configurés pour être montés à deux positions qui sont symétriquement disposées le long de la ligne centrale d'une automobile (600).

3. Dispositif (500) selon la revendication 1, comprenant en outre des pinces de roue configurées pour être montées respectivement sur les roues arrière ou les roues avant de l'automobile (600) ;
dans lequel les deux lasers (400) sont respectivement montés sur les pinces de roue.

4. Dispositif (500) selon l'une des revendications 1 à 3, dans lequel chacun des deux lasers (400) comprend :
une partie émettrice (410) configurée pour émettre un faisceau laser vers une échelle horizontale correspondante des échelles horizontales (2020) ; un arbre d'installation (420) installé sur la partie émettrice (410) pour installer le laser (400) sur une roue de l'automobile ; et
une cible d'observation (430) montée sur la partie émettrice (410), la cible d'observation (430) comprenant une face de cible d'observation (4300), un trou d'émission (4302) étant prévu sur la face de cible d'observation (4300) pour permettre l'émission du faisceau laser.

5. Dispositif (500) selon la revendication 4, dans lequel la face d'observation (4300) est configurée pour afficher la position d'un faisceau laser.

6. Dispositif (500) selon la revendication 4 ou 5, dans lequel la cible d'observation (430) est une plaque rectangulaire.

7. Dispositif (500) selon l'une des revendications 4 à 6, dans lequel le trou d'émission (4302) est situé au centre de la face de la cible d'observation (4300).

8. Dispositif (500) selon l'une des revendications 4 à 7, dans lequel la partie émettrice (410) comprend un interrupteur (4102) configuré pour allumer ou éteindre la partie émettrice (410).

9. Dispositif (500) selon l'une des revendications 4 à 8, dans lequel chacun des deux lasers (400) comprend en outre un arbre d'installation (420) installé sur la partie émettrice (410), l'arbre d'installation (420) étant configuré pour monter chacun des deux lasers (400).

10. Dispositif (500) selon l'une des revendications 1 à 9, dans lequel l'ensemble du support (10) comprend :
un support de base (11) ; et
un support de tige verticale (12) monté sur le support de base (11), le support de tige verticale (12) comprenant une tige de vis de levage (122), la tige de vis de levage (122) étant configurée pour entraîner l'ensemble de la traverse (20) à se déplacer le long de la tige de vis de levage (122) dans la direction verticale lorsque la tige de vis de levage (122) tourne.

11. Dispositif (500) selon la revendication 10, dans lequel l'ensemble de support (10) comprend en outre un moteur configuré pour entraîner la rotation de la tige de la vis de levage (122).

12. Dispositif (500) selon la revendication 10 ou 11, dans lequel le support de tiges verticales (12) comprend deux tiges verticales (1200), les deux tiges verticales (1200) étant disposées verticalement parallèlement l'une à l'autre à un intervalle, les deux tiges verticales (1200) étant configurées pour guider l'ensemble de la poutre transversale (20) à se déplacer le long de la direction verticale.

13. Dispositif (500) selon la revendication 12, dans lequel l'assemblage de la poutre transversale (20) comprend un élément de support (200), l'élément de support (200) comprenant :
un corps de support (2002), le rail de guidage (202) étant monté sur le corps de support (2002) ;
un bloc mobile (2004) monté de manière fixe sur le corps de support (2002), le bloc mobile (2004) étant ajusté par filetage avec la tige de vis de levage (122), la tige de vis de levage (122) étant configurée pour entraîner le bloc mobile (2004) à se déplacer le long de la tige de vis de levage (122) dans la direction verticale ; et
un bloc coulissant (2006) monté de manière fixe sur le corps de support (2002), le bloc coulissant (2006) étant installé de manière mobile sur chacune des deux tiges verticales (1200).

14. Dispositif (500) selon la revendication 13, dans lequel deux blocs coulissants (2006) sont installés de manière mobile sur chacune des deux tiges verticales (1200).

15. Méthode pour délimiter la ligne centrale d'une automobile (600), comprenant : un appareil de support (100) et deux lasers (400), l'appareil de support (100) comprenant un rail de guidage (202), des échelles horizontales (2020) étant respectivement disposées de part et d'autre du rail de guidage (202) ;
déplacer l'appareil de support (100) vers une position devant ou derrière l'automobile (600) ;
éloigner l'appareil de support (100) de l'automobile (600) d'une distance prédéfinie, les échelles horizontales (2020) étant parallèles à un essieu de l'automobile (600) ;
installer les deux lasers (400) à deux endroits symétriques le long de la ligne centrale de l'automobile (600) ;
mettre en marche les deux lasers (400) pour qu'ils projettent respectivement un faisceau laser sur les échelles horizontales, de sorte que deux points laser des deux lasers (400) tombent respectivement sur les échelles horizontales (2020) ;
en fonction des relevés des deux points laser sur les échelles horizontales (2020), en maintenant inchangée la distance prédéfinie entre l'appareil de support (100) et l'automobile (600), et en ajustant une position horizontale de l'appareil de support (100) par rapport à l'automobile (600) de manière à ce que les relevés des deux points laser sur les échelles horizontales (2020) soient les mêmes ; **caractérisé par**
fournir un miroir réfléchissant (200) et un diaphragme (300), le miroir réfléchissant (200) étant installé sur le rail de guidage (202) et pouvant être déplacé horizontalement le long du rail de guidage (202) ;
déplacer le miroir réfléchissant (200) vers une extrémité du rail de guidage (202), de sorte que le faisceau laser situé du même côté que le miroir réfléchissant (200) irradie sur une face réfléchissante du miroir réfléchissant (200) ;
placer le diaphragme (300) dans une position intermédiaire entre le laser et le miroir réfléchissant (200), et ajuster le diaphragme (300) et les lasers (400), de sorte que le faisceau laser se trouve du même côté que le miroir réfléchissant (200) et traverse le diaphragme (300) ;
réglage de la position du miroir réfléchissant (200), de sorte que les faisceaux laser reviennent le long d'une trajectoire originale pour être projetés sur les deux lasers (400) respectivement ; et
en déplaçant le miroir réfléchissant (200) vers un centre du rail de guidage (202), en examinant à nouveau les graduations des points laser des faisceaux laser des deux côtés sur les échelles horizontales (2020), afin de déterminer si la démarcation de la ligne médiane de l'automobile (600) est achevée.
